# EUROPEAN PATENT SPECIFICATION

(11) **EP 0 710 326 B1**
(45) Date of publication and mention of the grant of the patent: **01.04.1998**
(21) Application number: 94921052.0
(22) Date of filing: 19.07.1994
(51) Int. Cl.: F03D 3/06

(54) **TURBINE**
TURBINE
TURBINE

(30) Priority: 20.07.1993 GB 9315044
(43) Date of publication of application: 08.05.1996
(73) Proprietor: SONTECH ENERGY RESEARCH, Airport, Accra (GH); GHANA MINISTRY OF ENERGY AND MINES, Accra (GH)
(72) Inventor: JACKSON, Kofi, Abaka, Airport Accra (GH)
(74) Representative: Hammler, Martin Franz
(86) International application number: GB9401563
(87) International publication number: WO9503488

(56) References cited:
- AU-A- 31 765
- FR-A- 555 314
- FR-A- 2 257 024
- FR-A- 2 291 381
- GB-A- 2 184 171
- US-A- 4 095 422

## Description

### TECHNICAL FIELD

This invention relates to turbines and similar fluid energy conversion means comprising a rotating shaft with turbine blades.

### ROLE

This invention may be used to generate rotational mechanical force from a moving fluid medium such as the sea, wind or a flowing river to drive electric generators and other devices.

Like known wind turbines or the turbine of a hydro-electric dam, the turbine of the present invention will produce rotational force from moving fluid such as wind or water to do work.

Also, like the hydro-electric or wind turbine, the invention requires coupling and transmission means to a generator or other devices to do work. Similarly, it also requires suitable mounting and installation means.

### BACKGROUND

Water turbines make it possible to convert the force of moving water into rotational mechanical force for driving electric generators and other devices.

The old overshot water-wheel has many scoop-like buckets around its edge. The weight of water falling into its buckets causes the wheel to turn and thus convert most of the energy of the water fed to it into mechanical energy.

Today, the two main types of water turbine wheels that generate electricity at dams and water-falls are the Impulse and Reaction turbine wheels.

The pelton Wheel is a typical impulse turbine with cup-shaped buckets. The force of man-directed water striking the buckets turns the wheel. Impulse wheels work best where a small volume of water falls a great distance.

Reaction turbine wheels are mounted on vertical shafts and are completely under water. They have either spirally curved vanes, called Francis-type, or blades like a ship's propeller called Kaplan-type. Such wheels are turned by the weight or pressure of the water as well as its speed of flow. They work best where a large volume of water falls a short distance.

Wind turbines for driving electric generators typically have a number of blades (usually two or three) rotating about a horizontal axis, although vertical axis wind turbines are known. Horizontal axis turbines require a high mast or tower upon which they are mounted and a mechanism to keep them pointed into the wind. They are generally constructed of advanced materials and are difficult and expensive to maintain.

### Assessment:

Typically, water turbines require dams, water-falls or some source of man-controlled water to operate. Their installation costs in terms of constructional works and environmental effects are enormous and choice of site is difficult. Similar problems exist with the siting, construction and maintenance of wind turbines. The problem of harnessing the energy of the earth's natural and constant flow of wind and water to produce useful mechanical and electric power, in the main, remains unsolved.

GB-A-2184171 (Vannan) discloses a fluid mill having a vertical shaft with radially extending arms to which are mounted vanes pivotable about vertical bearing rods to open and close against stops as the arms rotate. The design is said to minimise shock loadings as the vanes open and close. However such shock loadings are not eliminated as the blade tips do not have the correct camber for generation of closure opposing forces and thus on closure the vanes hit their stops at significant speeds.

FR 2291381 (Fassel) discloses a turbine similar to that of GB 2184171, where once again the blade tips do not have the correct camber for generation of closure opposing forces and the problem of blade closure shocks is not addressed.

US 4095422 (Kurakake) discloses a vertical axis swinging blade water wheel in which the blades have curved tips closeable against stop pins. However the blade tip curvature is not effective or appropriate for reducing mechanical closure shocks, as in the position in which the blades hit the stop pins they will still be generating forces tending to press them against these pins.

### THE INVENTION

The invention as claimed is intended to provide a solution to the problem of harnessing the energy of flowing fluids.

This invention provides a turbine comprising a frame rotatable about an axis and flaps mounted to the frame each pivotable about axes parallel to the frame rotational axis so as to close against the frame, presenting a maximum frontal area when rotating with the fluid flow and so as to move to present a minimum frontal area when rotating against the fluid flow, wherein the tip of each flap directed towards the frame rotational axis as the flap moves with the fluid flow has a concave curvature on its downstream face in a cross-section normal to the frame rotational axis arranged so that as the flaps approach the frame on closure, the flaps generate forces opposing such closure, thereby reducing mechanical shocks. Preferably the remainder of the flap has a concave curvature on its upstream face. The turbine according to the invention typically has a vertical shaft and vertical blades that present maximum frontal area(s) across the path of the natural flowing wind or water and sweeps horizontally. The concave shape of the downstream face of the flap tips directed towards the frame axis as the flaps move with the fluid flow assists the flaps to approach the frame smoothly and at low speed, minimising mechanical shocks.

Also, unlike the hydro-electric turbine which relies on falling water or a dam for high water head, the invention may take its energy from the natural horizontal flow of water. Unlike most modern wind turbines, a turbine according to the invention typically is insensitive to wind direction and may employ relatively simple technologies.

Further preferred features of the invention are in the dependent claims and the following description of preferred embodiments, made with reference to the drawings, wherein:
Fig. 1a shows in elevation a flapping turbine according to one embodiment of the invention, the turbine having two blades or wings;
Fig. 1b shows the turbine of Fig. 1a in plan, the arrows B representing fluid flow direction and arrows C the direction of rotation of the turbine; D shows the camber of the majority of the blade while E shows the reversed camber at the tail of the blade;
Figs. 2a and 2b are views similar to Figs. 1a and 1b, but showing a turbine with four blades or wings;
Figs. 3a, 3b illustrate the flaps of the flapping turbine in operation;
Fig. 4 shows further embodiments of the invention wherein each blade or wing has more than one flap;
Figs. 5 and 6 illustrate yet further embodiments of the invention.

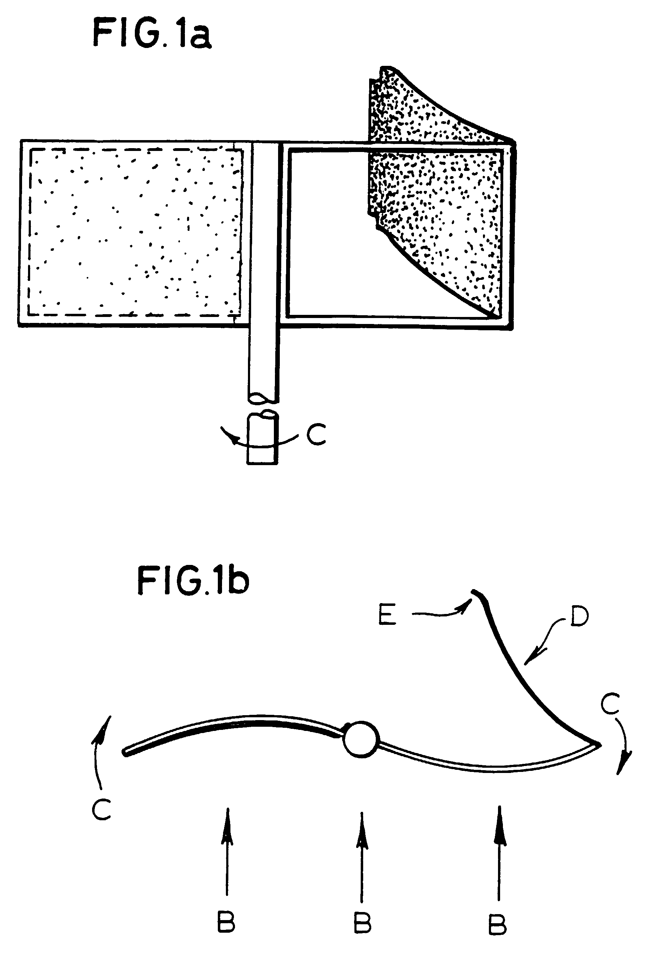

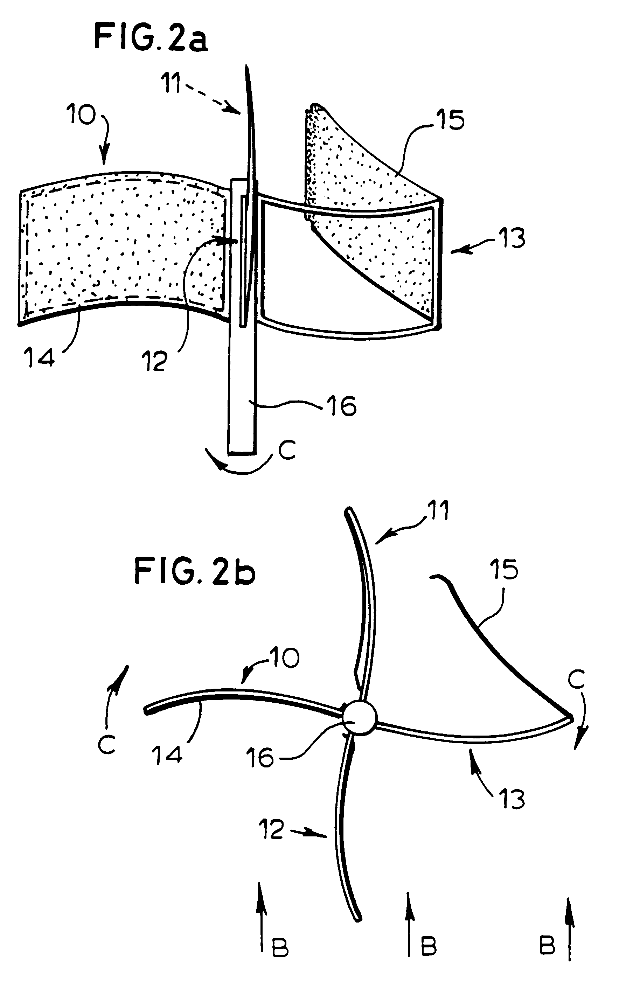

Typically, a Flapping Turbine arrangement will comprise a rotating shaft with two or more blades or wings. [See Figs. 1a, b - two wings, and Figs. 2a, b - four wings.]

Each blade or wing may be seen as a large window mounted on a shaft. The window comprises a curved rigid border frame having a generally convex side facing the desired direction of rotation. The frame has a rigid flap which shuts and opens on the concave face of the border frame.

The flap is hinged at the outer vertical post of the border frame and for the most part is cambered to follow the curvature of the frame as shown at D in Fig. 1b, but the camber is reversed at the trailing end of the flap, referenced E in Fig. 1b.

The chord of each wing radiates from the rotational axis of the shaft and the axis of each wing is parallel to the shaft axis.

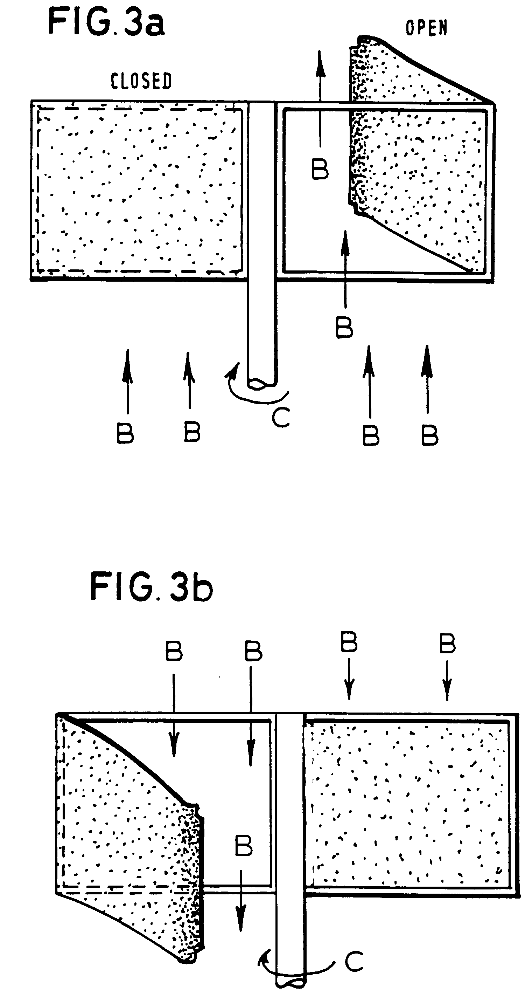

The window closes when facing upstream or opens when facing downstream (Figs. 3a, 3b). The curved face D assists in energy extraction while the reversed curve E at the tail end dampens the mechanical shocks as the flap closes or opens.

The windows of the wings are set to face the same rotational direction. Therefore, when there is fluid moving past the shaft, window(s) to one side would be facing upstream and would be shut, while window(s) on the other side would be facing downstream and would be opened.

It is the opening and closing of the major surface areas of the turbine that gives the name Flapping Turbine.

The flap(s) operate(s) best when hinged from outboard to shut inwards towards the shaft. Alternatively, the flaps may be partially counter-balanced by having their hinges positioned part-way inboard of their outer edges, towards their centres or mass-balanced about their hinge lines.

Provision of multiple flaps per blade and counterbalancing them further helps to minimise mechanical shocks as the blades open and close.

Typically, the turbine blades would be identical and face the same rotational direction - that is, the convex sides of curved portions D point in the desired direction of rotation.

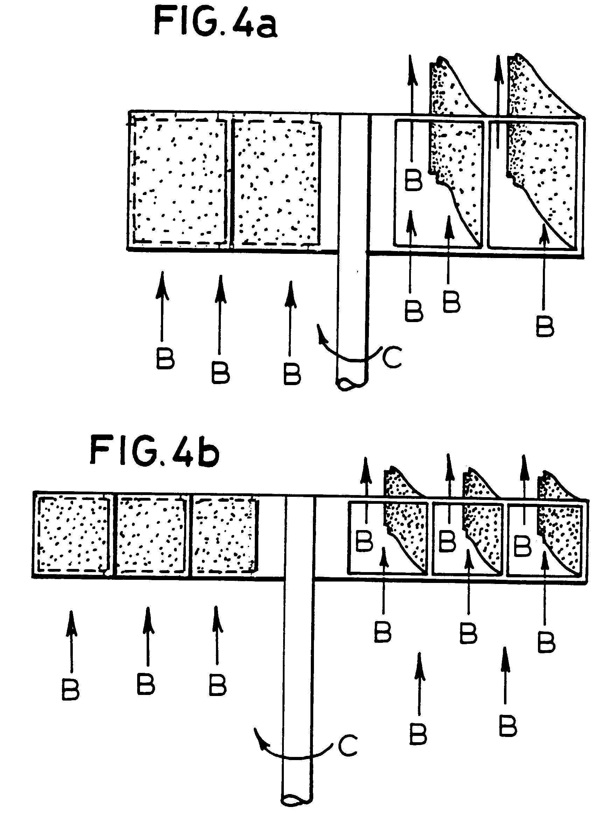

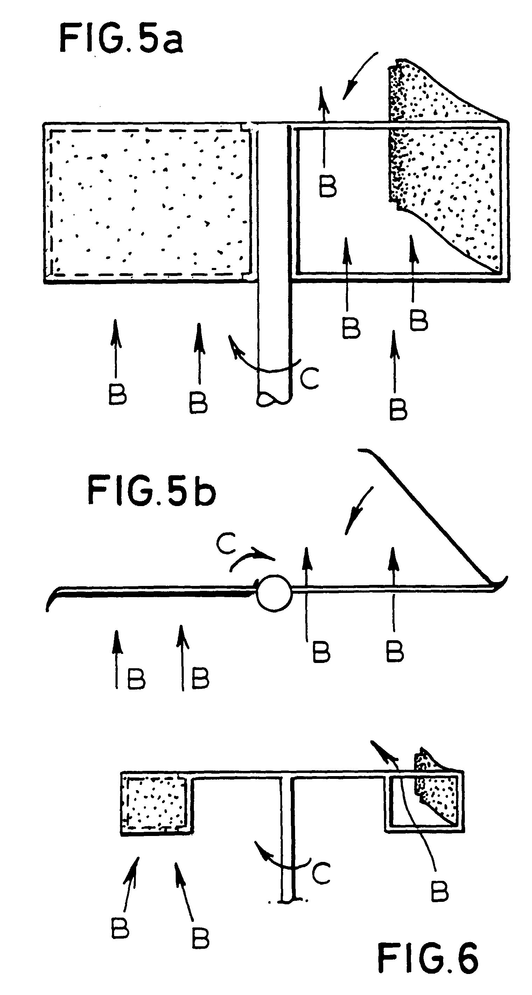

There is wide flexibility in the size and shape of the flapping turbine. The frame would be attached to the shaft but the flapping area may be further out (Fig. 6). Its plan view may be straight with its tip bent (Fig. 5), or typically the frame and the main body of the flap would be curved into a concave shape facing upstream on those blades moving with the fluid flow, with a small concave portion facing downstream at the tail end of the flap, that is at the end of the flap directed towards the frame rotational axis when the flap is in its closed position (Figs. 1-3). The opening and closing of the window of a turbine wing may involve one or more flaps (see Fig. 4).

The innovation of the present flapping turbine lies in:
a) The ability of the turbine wing to close its "window" to present maximum frontal area for maximum push effect when facing upstream, then open to present minimum frontal area for minimum counter rotation push when facing downstream or backing into stream thus achieving resultant turning moment in predetermined direction to produce rotation regardless the direction of flow of the fluid medium.
b) The use of a curved or cambered flap or shutter plate with reversed camber tail for smoothening the opening and closing of the flap.

### OPERATION OF JACKSON FLAPPING TURBINE

In operation we may consider a typical Flapping Turbine system with four blades 10, 11, 12, 13 (Figs. 2a, 2b), put into fluid flowing in direction B.

The moving fluid pushes the window 14 of blade 10 shut while it pushes the opposite window 15 open. Blade 10 presents maximum frontal area and is pushed forcefully downstream. Blade 13 presents minimum frontal area so the fluid flows past it and gives it minimum push towards downstream. The axis of blades 10 and 13 rotates and therefore gives rotation to the shaft 16. In the process, blades 11 and 12 also rotate. Blade 11 opens its window as it moves backwards into stream while blade 12 keeps its window shut while it progressively presents more and more solid frontal area to the stream. Like 10, blade 12 contributed positive turning force while, like 13, blade 11 contributes feeble counter force to that of 12. Blades 10 and 12 therefore contribute net positive turning movement until a 90 degree rotation has been achieved.

Blades 10 and 13 are now lying along the flow of the fluid and may be said to be transiting into negative and positive contributors respectively.

Blades 11 and 12 are now lying across the direction of flow with blade 12 presenting maximum frontal area against the flow and therefore generating maximum positive turning movement while blade 11 has its window widely opened and presenting minimum frontal area thus contributing small negative force. The turbine blades and therefore the shaft are put into rotation. The cycle continues and therefore continuous rotation is achieved.

Simply put, in a steady flow of water environment, while a blade wheels through a 360 degree turn, its window is shut about half the time and opened the other half of the time.

### PREVIOUS SYSTEMS

Previous systems related to the Flapping Turbine system are the wind energy conversion turbine and hydro-electric turbines, such as the Francis and Kaplan turbines and the overshot and undershot water wheel turbines.

### Disadvantages of Wind Turbines

a) They employ advanced technologies and are therefore expensive;
b) They employ large diameter turbine blades therefore their installations are tall and expensive;
c) Most of them, especially the more powerful ones, have a horizontal shaft, so some complex installations have to be put at the top of the tall structure, including means to keep them pointed into the wind.

### Disadvantages of Hydro-electric Turbine

a) Requires man-directed water or a dam and therefore creates environmental problems;
b) Even a fast flowing river is often not convenient;
c) Complex turbine designs are required for tidal flows - it is difficult to ensure that the direction cf shaft rotation is independent of fluid flow direction.

### Advantages of the Flapping Turbine

The proposed Flapping Turbine has some basic advantages over the present systems:
a) The same basic design is suitable in wind, sea water, flowing river or tidal flows;
b) The turbine blade is like a simple window frame with a flapping shutter and therefore employs simple technologies;
c) It may employ very large diameter turbine blades but its clearance height may be only a little more than its supporting mast because it can be designed to sweep horizontally;
d) It may typically employ a vertical shaft therefore when used as a wind turbine all transmissions and driven devices can be installed at ground level. When used in water, power may be taken from either the top or the bottom of the rotor shaft conveniently because the total system would be relatively short;
e) It does not require a dam. Typically, flowing water or wind is all that is needed;
f) Although the system can be built small to power small devices, in the sea environment, it can be built big enough to power the largest generators;
g) It is simple and therefore cheap to construct;
h) It is far more environmentally friendly than any of today's systems;
i) It offers an easy and cheap means of harvesting some of the unlimited power of the wind, sea and natural flow of rivers.
j) Shaft rotation direction is independent of fluid flow direction;
k) Applying this innovation, nations with access to the sea or large rivers have the potential of becoming self-sufficient in electricity without harming the environment.

## Claims

1. A turbine comprising a frame rotatable about an axis and flaps (14, 15) mounted to the frame each pivotable about axes parallel to the frame rotational axis so as to close against the frame presenting a maximum frontal area when rotating with the fluid flow and so as to move to present a minimum frontal area when rotating against the fluid flow, wherein the tip (E) of each flap (14, 15) directed towards the frame rotational axis as the flap moves with the fluid flow has a concave curvature on its downstream face in a cross-section normal to the frame rotational axis arranged so that as the flaps (14, 15) approach the frame on closure, the flaps (14, 15) generate forces opposing such closure, thereby reducing mechanical shocks.

2. A turbine as claimed in claim 1 characterised in that the remainder of the flap (D) away from said tip (E) has a concave curvature on its upstream face in a cross-section normal to the frame rotational axis.

3. A turbine as claimed in claim 1 or 2 characterised in that the frame comprises a plurality of arms, to each of which is mounted a plurality of said flaps.

4. A turbine as claimed in claim 1 or 2 characterised in that the flap pivot axes lie away from the outboard edges of the flaps as they move with the fluid flow.

## Patentansprüche

1. Turbine mit einem Rahmen, der drehbar um eine Achse angebracht ist, und Klappen (14, 15), die am Rahmen montiert sind, wobei jede schwenkbar um Achsen parallel zur Rahmendrehachse gelagert ist, so daß sie gegen den Rahmen schließen und eine maximale Stirnfläche bieten, wenn sie mit der Fluidströmung drehen, und sich bewegen, um eine minimale Stirnfläche zu bieten, wenn sie gegen die Fluidströmung rotieren, wobei das äußere Ende (E) jeder Klappe (14, 15), zur Rahmendrehachse hin gerichtet, wenn sich die Klappe mit der Fluidströmung bewegt, eine konkave Wölbung auf ihrer stromabwärts gelegenen Stirnseite in einem Querschnitt senkrecht zur Rahmendrehachse aufweist und so angeordnet ist, daß, wenn sich die Klappen (14, 15) beim Schließen dem Rahmen nähern, die Klappen (14, 15) Kräfte erzeugen, welche sich dem Schließen widersetzen, wodurch mechanische Stöße verringert werden.

2. Turbine nach Anspruch 1, dadurch gekennzeichnet, daß der vom genannten äußeren Ende (E) abgelegene restliche Teil der Klappe (D) eine konkave Wölbung auf seiner stromaufwärts gelegenen Stirnseite in einem Querschnitt senkrecht zur Rahmendrehachse aufweist.

3. Turbine nach Anspruch 1 oder 2, dadurch gekennzeichnet, daß der Rahmen eine Mehrzahl von Armen umfaßt, wobei an jedem eine Mehrzahl der genannten Klappen montiert ist.

4. Turbine nach Anspruch 1 oder 2, dadurch gekennzeichnet, daß die Klappenschwenkachsen von den äußeren Rändern der Klappen entfernt liegen, wenn sich diese mit der Fluidströmung bewegen.

## Revendications

1. Turbine comprenant un bâti pouvant tourner autour d'un axe et des volets (14, 15) montés sur le bâti et pouvant chacun pivoter autour d'axes parallèles à l'axe de rotation du bâti de manière à se fermer contre le bâti en présentant une surface frontale maximale lorsqu'il tourne avec le courant de fluide et de manière à présenter une surface frontale minimale lorsqu'il tourne contre le courant de fluide, dans laquelle l'extrémité (E) de chaque volet (14, 15) dirigée vers l'axe de rotation du bâti lorsque le volet se déplace avec le courant de fluide a une courbure concave sur sa face aval dans une section transversale perpendiculaire à l'axe de rotation du bâti agencée de telle sorte que, lorsque les volets (14, 15) s'approchent du bâti lors de la fermeture, les volets (14, 15) produisent des forces s'opposant à une telle fermeture, réduisant ainsi les chocs mécaniques.

2. Turbine selon la revendication 1, caractérisée en ce que le reste (D) du volet en partant de ladite extrémité (E) a une courbure concave sur sa face amont dans une section transversale perpendiculaire à l'axe de rotation du bâti.

3. Turbine selon la revendication 1 ou la revendication 2, caractérisée en ce que le bâti comprend une multiplicité de bras sur chacun desquels est montée une multiplicité desdits volets.

4. Turbine selon la revendication 1 ou la revendication 2, caractérisée en ce que les axes de pivotement des volets sont situés à distance des bords extérieurs des volets lorsqu'ils se déplacent avec le courant de fluide.
